(19) Europäisches Patentamt
European Patent Office
Office européen des brevets

(11) **EP 3 440 017 B1**

(12) **EUROPEAN PATENT SPECIFICATION**

(45) Date of publication and mention
of the grant of the patent:
**03.07.2019 Bulletin 2019/27**

(51) Int Cl.:
*C02F 1/461* *(2006.01)*       *C02F 1/469* *(2006.01)*
*H01G 11/32* *(2013.01)*       *H01G 11/38* *(2013.01)*
*C01B 32/168* *(2017.01)*       *H01G 11/86* *(2013.01)*
*H01G 11/36* *(2013.01)*       *C02F 1/66* *(2006.01)*
*C02F 1/72* *(2006.01)*

(21) Application number: **17713319.6**

(22) Date of filing: **30.03.2017**

(86) International application number:
**PCT/EP2017/057521**

(87) International publication number:
**WO 2017/174429 (12.10.2017 Gazette 2017/41)**

(54) **ELECTRODE FOR CAPACITIVE DEIONISATION**

ELEKTRODE ZUR KAPAZITIVEN DEIONISIERUNG

ÉLECTRODE POUR DESIONISATION CAPACITIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.04.2016 EP 16163982**

(43) Date of publication of application:
**13.02.2019 Bulletin 2019/07**

(73) Proprietors:
• **Unilever N.V.**
**3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**
• **Unilever PLC**
**London, Greater London EC4Y 0DY (GB)**
Designated Contracting States:
**CY GB IE MT**

(72) Inventors:
• **ALENCHERRY, Tinto, Johnichan**
**Whitefield Bangalore 560 066 (IN)**
• **GHOSH, Somnath**
**Whitefield Bangalore 560 066 (IN)**
• **RAJANARAYANA, Venkataraghavan**
**Whitefield Bangalore 560 066 (IN)**

(74) Representative: **Reijns, Tiemen Geert Pieter**
**Unilever Patent Group**
**Olivier van Noortstraat 120**
**3133 AT Vlaardingen (NL)**

(56) References cited:
**WO-A1-2013/126840       WO-A1-2014/090508
US-A1- 2015 175 449**

**Description**

**Field of the invention**

The present invention relates to an electrode for capacitive deionisation. More particularly the present invention relates to electrode comprising carbon nanotube for providing improved salt removal.

**Background of the invention**

Several technologies are available for the purification of water. The list includes ultraviolet (UV) radiation, chemical purification agents like hypochlorite salts as well as the use of various membranes. The listed technologies do not provide deionisation. However other methods such as distillation, reverse-osmosis, capacitive deionisation and ion-exchange resins do provide deionisation.

Deionisation becomes necessary if water contains a lot of dissolved solids, often measured as the TDS of water (Total Dissolved Solids). Some amount of TDS in water is necessary for good taste.

Deionisation of water by either distillation, reverse osmosis or ion-exchange resins method have several disadvantages. Such method either use a large amount of polymer resins and chemicals or are energy intensive and may lead to secondary contamination, which makes these methods difficult to maintain.

Capacitive deionisation is widely in use to overcome these shortcomings. Purifiers for deionising water generally have an in-built mechanism (e.g. conductivity meter) to sense the total dissolved solids, the sensors are programmed with a pre-defined level ($TDS_{set}$) which is usually fixed after taking into account the average TDS of input water and the average TDS of purified water, which is desired by consumers. In the process of capacitive deionization, the purity of water is ascertained by a pre-decided parameter called $TDS_{set}$. Water containing more TDS than the set value is considered impure and thereby not suitable for consumption. In other words, such water contains higher amount of dissolved solids, primarily inorganic salts which renders it non-potable. Conversely, so long as the TDS of purified (or output) water is less than the $TDS_{set}$, the water remains fit for consumption.

In a capacitive deionization process, water flows through one or more pairs of oppositely charged electrodes during which ions which are present in water get attracted and adsorbed to the surface of electrodes. This phenomenon results in a drop in the TDS.

However, the performance of any electrode generally drops over a period of use. At one point during the life of the electrode, the device is no longer able to provide the desired degree of reduction in the TDS. This phenomenon affects usable life of the electrodes. However, consumers want longer lasting electrodes.

Performance of any CDI system is gauged by two parameters. The first is the degree of reduction in the TDS brought about by the system and the second is called recovery which is defined as the ratio of purified water to the total intake of water.

WO 2014/090508 A1 (Unilever) discloses an electrode for use in capacitive deionization which provides enhanced recovery and greater reduction in the total solids. The electrode is made of an adsorbent impregnated with a substance having specific conductivity and standard hydrogen potential, conductive carbon black and a binder.

US 2012/0187054 A1 (Samsung Electronics Co. Ltd.) discloses a filter device that selectively adsorbs deleterious metal or metal ions from water while maintain beneficial minerals existing in water. The electrode of the filter device has one or more electrode material layers said electrode material layer includes a metal adsorbing material having a basic functional group on its surface. This application disclose an electrode which selectively binds to the heavy metal or metal ions from water but does not bind to calcium and magnesium ions present in the input water.

A preferred electrode is that which continues to offer pure water for as long a time as possible, with higher recovery and which is consistent at providing more TDS removal. Therefore there is a need to provide improved electrode for capacitive deionization.

An object of the present invention is to provide an electrode that gives enhanced recovery.

It is a further object of the invention to provide an electrode which gives higher TDS removal.

**Summary of the invention**

We have determined that when an electrode active material has an adsorbent impregnated with a metal selected from gold, silver, platinum or copper or an alloy of the metal or mixtures of the metal and a carbon nanotube having a surface carbon atom modified with oxygen based functional group or derivatives thereof wherein the oxygen based functional group is selected from hydroxyl group, a carbonyl group , an aldehyde group , a carboxyl group , a nitro group or a mixture thereof, the electrode active material provides significantly improved salt removal. It is also surprisingly found that the electrode active material has a significantly higher electrical conductivity.

According to a first aspect, disclosed is an electrode active material for a capacitive deionisation electrode, said electrode active material comprising:

>   i. an adsorbent impregnated with a metal;
>   ii. a conductive carbon black;
>   iii. a carbon nanotube wherein the carbon nanotube has a surface carbon atom modified with an oxygen-based functional group or derivatives thereof; and,
>   iv. a binder.

wherein the oxygen based functional group is selected from hydroxyl group, a carbonyl group , an aldehyde group , a carboxyl group , a nitro group or a mixture thereof and wherein the metal selected from gold, silver, platinum or copper or an alloy of the metal or a mixture thereof.

According to a second aspect disclosed is an electrode for capacitive deionization comprising an electrode active material of the first aspect dispersed on a current collector.

According to a third aspect of the present invention disclosed is a process for preparing electrode active material of the first aspect for capacitive deionization electrode having the steps of:

>   i. preparing a slurry comprising:
>
>   >   a) an adsorbent impregnated with a metal selected from gold, silver, platinum or copper or an alloy of the metal or a mixture thereof;
>   >   b) a binder;
>   >   c) a carbon nanotube wherein the carbon nanotube has a surface carbon atom modified with an oxygen-based functional group or derivatives thereof and wherein the oxygen based functional group is selected from hydroxyl group, a carbonyl group , an aldehyde group , a carboxyl group , a nitro group or a mixture thereof;
>   >   d) a conductive carbon black; and,
>   >   e) a fluid in an amount not more than four times the total dry weight of said slurry;
>
>   ii. applying the slurry obtained in step (i) onto a substrate placed in a mould;
>   iii. compressing said mould under a pressure of from $196kN/m^2$ to $980kN/m^2$;
>   iv. heating said mould to a temperature in the range 150 to 350°C for 30 minutes to 2 hours to provide a substrate coated with electrode active material; and,
>   v. detaching the electrode active material from the substrate to provide the electrode active material.

Also disclosed a process for preparing the electrode of the second aspect for capacitive deionization having the steps of:

>   i. preparing a slurry comprising:
>
>   >   a. an adsorbent impregnated with a metal selected from gold, silver, platinum or copper or an alloy of the metal or a mixture thereof;
>   >   b. a binder;
>   >   c. a carbon nanotube wherein the carbon nanotube has a surface carbon atom modified with an oxygen-based functional group or derivatives thereof and wherein the oxygen based functional group is selected from hydroxyl group, a carbonyl group , an aldehyde group , a carboxyl group , a nitro group or a mixture thereof;
>   >   d. a conductive carbon black; and,
>   >   e. a fluid in an amount not more than four times the total dry weight of said slurry;
>
>   ii. applying the slurry obtained in step (i) onto a current collector placed in a mould;
>   iii. compressing the mould under a pressure of from $196kN/m^2$ to $980kN/m^2$;
>   iv. heating the mould to a temperature in the range 150 to 350°C for 30 minutes to 2 hours to form the electrode; and,
>   v. demoulding the moulded electrode.

According to a further aspect disclosed is use of an adsorbent impregnated with a metal selected from gold, silver, platinum or copper or an alloy of the metal or a mixture thereof and a carbon nanotube having a surface carbon atom modified with an oxygen-based functional group or derivatives thereof and the oxygen-based functional group is selected from hydroxyl group, a carbonyl group , an aldehyde group , a carboxyl group , a nitro group or a mixture thereof in an electrode active material in a capacitive deionization electrode for prolonging the life of the electrode.

**Detailed description of the invention**

According to a first aspect disclosed is an electrode active material having an adsorbent impregnated with a metal, a conductive carbon black, a carbon nanotube and a binder.

Electrode active material

Disclosed electrode active material preferably has a contact angle with water of from 50 degrees to 85 degrees. Preferably, the contact angle with water is from 65 degrees to 85 degrees more preferably 75 degrees to 85 degrees and most preferably from 80 degrees to 85 degrees.

By the term "electrode active material" it should be understood to mean a material comprising an adsorbent, a carbon nanotube as disclosed herein, a binder and a conductive carbon black which material is dispersable on a current collector. The electrode active material may be applied on the current collector as a coating; or it may be bonded or connected to a current collector. The electrode active material is capable of holding and releasing ions from its structure during the charging and discharging cycles of a capacitive deionization cell.

Adsorbent

Disclosed electrode active material includes an adsorbent, which adsorbent is impregnated with a metal selected from gold, silver, platinum or copper or an alloy of the metal or a mixture thereof.

The preferred adsorbent is selected from activated carbon, high specific surface area graphite (HSAG), carbon nanotubes (CNT), activated carbon fiber, a cation exchange resin, zeolites, smectite or vermiculite.

The adsorbent preferably has a specific surface area of 100 $m^2$/g to 1300 $m^2$/g. It is preferred that the specific surface area of the adsorbent is more than 500 $m^2$/g, still preferably more than 600 $m^2$/g and still more preferably more than 800 $m^2$/g but preferably the specific surface area of the adsorbent is less than 1250 $m^2$/g, more preferably less than 1100 $m^2$/g, still more preferably less than 1000$m^2$/g.

A particularly preferred adsorbent is activated carbon. It is preferred that the activated carbon is obtained from bituminous coal, coconut shell, wood or petroleum tar. Preferably the surface area of activated carbon is greater than 500 $m^2$/g; more preferably greater than 1000 $m^2$/g. It is preferred that the size uniformity co-efficient of the activated carbon is less than 2, more preferably less than 1.5.

It is preferred that the Carbon Tetrachloride number of activated carbon is more than 50 %, more preferably greater than 60%. It is further preferred that iodine number of the activated carbon is more than 800 units, more preferably greater than 1000 units. Particle size of the activated carbon is preferably 75 to 300 $\mu$m, more preferably from 100 to 250 $\mu$m.

Modified forms of activated carbon including carbon cloth, carbon felt or carbon aerogel can also be used in place of or in addition to the activated carbon.

Metal

In the disclosed electrode active material, the adsorbent is impregnated with a metal selected from gold, silver, platinum or copper or an alloy of the metal or a mixture thereof.

It is believed that increased electrical conductivity of the adsorbent due to the presence of the metal provides enhanced recovery and greater reduction in total solids and provides more energy efficiency. It is believed that the increased electrical conductivity reduces resistance of the active material thereby leading to lesser potential drop inside the material and consequently greater potential is developed at the electrode-solution interface. This phenomenon increases the capacity of the electrodes to lower the salt (TDS) content. It also increases the kinetics of the process of removal of salts. As a result, it is believed that the recovery of the capacitive deionization system increases.

The metal (which the adsorbent is impregnated with) is selected from gold, silver, platinum or copper. Silver is particularly preferred. It is preferred that percentage of the metal impregnated on the absorbent, such as activated carbon, is 0.2 % to 0.8 wt%, more preferably 0.2 to 0.5 wt% of the adsorbent. Silver has a conductivity of 6.3x10$^7$ S/m and a standard reduction potential of 0.8 V with respect to the Standard Hydrogen Electrode. The adsorbent is preferably pre-impregnated with the metal. The adsorbent may preferably be pre-impregnated with an alloy of gold, silver, platinum or copper or a mixture of the metals.

In a highly preferred embodiment of the disclosed electrode active material the adsorbent is activated carbon and silver is impregnated or pre-impregnated on the activated carbon in an amount of 0.2 to 0.8 wt% of the activated carbon.

Conductive carbon black

Disclosed electrode active material includes a conductive carbon black. The conductive carbon black is a form of elemental carbon. Conductive carbon black is mostly produced by the oil furnace process from liquid aromatic hydrocarbons. In selecting carbon black for electrodes, the preferred and the important factors are total surface area and mesopore surface area, structure and surface oxidation.

Preferably the disclosed electrode active material includes 5 to 15wt% of conductive carbon black.

The total surface area of the conductive carbon black is preferably greater than 500 $m^2$/g. Further, it is preferred that mesopore area of the conductive carbon black is greater than 100 $m^2$/g, more preferably in the range of 100 $m^2$/g to 1000 $m^2$/g.

Structure of carbon black is characterized by its Oil Absorption Number (OAN). It is preferred that OAN of carbon black is 45 to 400 $cm^3$/100 grams, more preferably 100 to 400 $cm^3$/100 g, further more preferably 250 to 400 $cm^3$/100 g. It is preferred that the conductive carbon black has lower amount of chemisorbed oxygen on its surface thereof.

Suitable grades of carbon black may be selected from TIMCAL Graphite 5 Carbon (Grades: Ensaco™ 250G, Ensaco™ 350) or from Cabot Corporation (Grades: Regal™, Black Pearl™ 2000, Vulcan), or from Evonovik (Grade: PRINTEX™ XE-2), or from Akzo Nobel (Ketjen Black).

Carbon nanotube

Disclosed electrode active material includes a carbon nanotube wherein the carbon nanotube has a surface carbon atom modified with an oxygen-based functional group or derivatives thereof wherein the oxygen based functional group is selected from hydroxyl group, a carbonyl group , an aldehyde group , a carboxyl group , a nitro group or a mixture thereof.

The term surface carbon atom includes the carbon atom, at the ends and on the sidewall, of the outermost layer of the carbon nanotube, as well as carbon atom, both on the sidewall and/or at the end, of lower layers that may be exposed at defect sites of the outermost layer.

Carbon nanotube ("CNT") are macromolecules generally in a shape of a long thin cylinder often with a diameter of a few nanometers. A carbon nanotube is a single tubular molecule in which a large number of carbon atoms are continuously bonded in such a state that six-membered rings are formed and possesses a structure of nanometer order. Carbon nanotube is a graphene sheet in cylindrical form. The sidewall of a carbon nanotube is the outer surface of the graphene sheet. The ends of a nanotube can be open, or can have hemispherical caps on one or both ends.

Based on the orientation of the tube axis with respect to the hexagonal lattice, a carbon nanotube can have three different configurations: armchair, zigzag, and chiral (also known as spiral). In an armchair configuration, the tube axis is perpendicular to two of the six carbon-carbon bonds of the hexagonal lattice. In a zigzag configuration, the tube axis is parallel to two of the six carbon-carbon bonds of the hexagonal lattice. Both these two configurations are achiral. In chiral configuration, the tube axis forms an angle other than 90 or 180 degrees with any of six carbon-carbon bonds of the hexagonal lattice.

In addition to an exemplary common hexagonal structure, the cylinder of a carbon nanotube molecule can also contain other size rings, such as pentagon and heptagon. Replacement of some regular hexagons with pentagons and/or heptagons can cause cylinders to bend, twist, or change diameter, and thus lead to structures such as "Y-", "T-", and "X-junctions". Both single walled nanotubes (SWNT) and multi-walled nanotubes (MWNT) can exhibit these structural variations and configurations. However, the present invention is not limited by any particular configuration and structural variation. The carbon nanotube used in the present invention can be in the configuration of armchair, zigzag, chiral, or combinations thereof. The nanotube can also include structural elements other than hexagon, such as, pentagon, heptagon, octagon, or combinations thereof. The structural element other than hexagon on the sidewall of the nanotube often referred as a defect site, exhibits different chemical reactivity than the normal hexagonal structural element. In general, the defect site is more active chemically and more susceptible to chemical modifications.

A carbon nanotube of the present invention is either a single-walled nanotube (SWNT) double-walled nanotube or a multi-walled nanotube (MWNT). A SWNT comprises only one nanotube. Double-walled carbon nanotubes are coaxial nanostructures composed of exactly two single-walled carbon nanotubes, one nested in another. A MWNT comprises multiple layers of carbon nanotube superimposed and rolled in on themselves and each nanotube having a different diameter. Thus, the smallest diameter nanotube is encapsulated by a larger diameter nanotube, which in turn, is encapsulated by another larger diameter nanotube.

Another structural variation for MWNT molecules is the arrangement of the multiple tubes. A perfect MWNT is like a stack of graphene sheets rolled up into concentric cylinders with each wall parallel to the central axis. However, the tubes can also be arranged so that an angle between the graphite basal planes and the tube axis is formed. Such MWNTs may be known as a stacked cone, Chevron, bamboo, ice cream cone, or piled cone structures. A stacked cone MWNT can reach a diameter of about 100 nm.

The term "carbon nanotube" used in the present invention covers all structural variations and modification of SWNT and MWNT discussed herein, including configurations, structural defects and variations and tube arrangements.

Carbon nanotubes with desired structures and properties is prepared by any of the process well known in the art including but not limited to electric arc discharge, laser ablation, chemical vapor deposition and flame synthesis. Of the known methods, the most commonly used method is the chemical vapor deposition, which includes the techniques of catalytic carbon vapor deposition, catalytic chemical vapor deposition, and plasma enchanced chemical vapor deposition method.

Preferably the carbon nanotube may be single walled, double walled or multi-walled. Preferably, any of these carbon nanotubes has a carbon content of at least 60%, at least 80%, at least 90%, at least 95%, at least 98%, or at least 99% by weight, and a purity of at least 60%, at least 80%, at least 90%, at least 95%, at least 98%, or at least 99% by weight.

Preferably, the carbon nanotube includes a diameter from 0.0002 $\mu$m to 0.5 $\mu$m. More preferably the diameter is from 0.0004 $\mu$m to 0.5 $\mu$m, still more preferably the diameter is from 0.05 $\mu$m to 0.22 $\mu$m, still preferably from 0.06 $\mu$m to 0.22 $\mu$m and still more preferably from 0.08 $\mu$m to 0.22 $\mu$m.

Preferably, the carbon nanotube has a length of at least 200 micrometer, more preferably of at least 100 micrometer, further preferably of at least 50 micrometer, still preferably of at least 20 micrometer and most preferably of at least 10 micrometer. Preferably, the carbon nanotube has an aspect ratio (a ratio of length to diameter) of greater than 5.

Preferably disclosed carbon nanotube is substantially purified, which may be prepared by extensively washing the carbon nanotube after reaction to remove impurities and then dried under vacuum. The substantially purified carbon nanotube preferably includes less than about 5%, less than about 4%, less than about 3%, less than about 2%, less than about 1%, less than about 0.5%, or less than about 0.1% by weight of impurities.

Preferably, the carbon nanotube is free of continuous thermal carbon overcoat, free of continuous hollow core, and preferably free of catalyst.

In the disclosed electrode active material the carbon nanotube has a surface carbon atom modified with oxygen based functional group and or derivatives thereof.

Preferably the oxygen based functional group or a derivative thereof may be provided either uniformly or non-uniformly on the surface of the carbon nanotube. The oxygen based functional group is selected from a hydroxyl group (-OH), a carbonyl group (-CO-), an aldehyde group (-CHO), a carboxyl group (-COOH), a nitro group ($-NO_2$) and a mixture thereof. More preferably the functional group includes a carboxyl group, a carbonyl group, or a nitro group still preferably the functional group is a carboxyl group, a nitro group, or a mixture thereof.

Preferably the surface carbon atom modified with an oxygen based functional group or derivatives thereof is located at one or both ends of the disclosed carbon nanotube, or on a sidewall of the carbon nanotube, preferably at a defect site. Preferably, the oxygen based functional group or a derivative thereof is attached by means of covalent bond to the surface carbon atom.

Modification of carbon nanotube is commonly accomplished by three different approaches, namely, thermally activated, electrochemical modification, and photochemical. The most common methods of thermally activated chemical modification are oxidation reactions. For example, extensive treatment of a carbon nanotube with concentrated nitric and sulfuric acid leads to the oxidative opening of the tube caps (the ends) as well as the formation of holes in the sidewall at the defeat sites. This treatment thus produces a carbon nanotube modified with oxygen-based functional groups such as carboxyl group attached to the surface carbon atom, which group can be further modified providing a vast variety of functional groups. Preferably, surface carbon atom of the carbon nanotube is modified with an oxygen-based functional group obtainable by treating the carbon nanotube with an oxidising agent comprising sulphuric acid and nitric acid in a ratio of preferably 3:1.

In a preferred method, the surface carbon atom of carbon nanotube is modified with an oxygen-based functional group obtainable by treating the carbon nanotube in the following manner. Nitric acid and sulfuric acid are mixed in a suitable ratio to produce a mixed acid solution, and then the carbon nanotubes are mixed with the mixed acid solution to obtain a dispersion of carbon nanotubes. Next, the carbon nanotube dispersion is stirred. The stirring can be carried out at room temperature using a conventional stirrer. The stirring time is in the range of 1 to 3 hours and can be varied depending on the ratio of nitric acid and sulfuric acid in the mixed acid solution and repeatedly centrifuged with distilled water till the pH of decant was neutral. The stirring time can be varied according to the state of the untreated carbon nanotubes. The carbon nanotube dispersion can be diluted with water before or during filtering. In the next step the carbon nanotube is filtered through 0.22 micron filter to obtain the modified CNT. The filtered modified CNT is then dispersed in distilled water and used to prepare electrode.

In the electrode active material according to the present invention, the carbon nanotube is preferably in an amount from 0.5 to 2 wt% of the adsorbent.

The concentration of the oxygen-based functional group on the surface of the carbon nanotube when determined by a direct acid titration technique using NaOH is from 3 to 5 mmol/grams.

Binder

Disclosed electrode active material includes a binder.

Preferably, the binder is thermoplastic. The term thermoplastic binder means a binder having melt flow rate (MFR) less than 5 grams/10 minutes, more preferably less than 2 grams/10 minutes, further more preferably less than 1gram /10 minutes.

Bulk density of the binder is preferably less than or equal to 0.6 g/cm$^3$, more preferably less than or equal to 0.5 g/cm$^3$, and further more preferably less than or equal to 0.25 g/cm$^3$.

Suitable examples of the binder include ultra high molecular weight polymer preferably polyethylene, polypropylene and combinations thereof, which have these low MFR values. The molecular weight is preferably in the range of $10^6$ to $10^9$ g/mole. Binders of this class are commercially available under the trade names HOSTALEN from Tycona GMBH, GUR, Sunfine (from Asahi, Japan), Hizex (from Mitsubishi) and from Brasken Corp (Brazil). Other suitable binders include LDPE sold as Lupolen (from Basel Polyolefins) and LLDPE from Qunos (Australia).

It is preferred that the thermoplastic binder is not a fibrillated polymer e.g. polytetrafluoroethylene (PTFE).

It is preferred that the particle size of the binder, more preferably the thermoplastic binder is in the range of 20 to 65 μm. Preferably the particle size is not more than 45 μm, still more preferably not more than 50 μm and further more preferably not more than 55 μm and most preferably not more than 60 μm but preferably the particle size is not less than 25 μm, more preferably not less than 30 μm, still more preferably not less than 35 μm and most preferably not less than 40 μm.

Preferably the electrode active material includes 8 to 30wt% of binder. Preferably, the amount of binder in the electrode active material is less than 29 wt%, still more preferably less than 28wt% but preferably the amount of binder in the electrode is more than 9 wt%, still preferably more than 10wt%, and most preferably more than 12wt%.

Electrode for capacitive deionisation

According to a second aspect disclosed is an electrode for capacitive deionization having a current collector and an electrode active material of the first aspect where the electrode active material is dispersed on the current collector.

As used herein, the term "current collector" refers to a structural part of a capacitive deionization cell whose primary purpose is to conduct electricity between the actual working part of the electrode and the terminals of a capacitive deionization cell. The current collector may be provided in the form of a sheet, a mesh, a plate or a foil. A current collector may, in general, be any one of various materials commonly used in the art, for example, graphite, a copper or aluminum, but is not limited thereto.

Process for preparation of the electrode and electrode active material:

In accordance with a third aspect of the invention disclosed is a process for preparing electrode active material of the first aspect for capacitive deionization electrode having the steps of:

    (i) preparing a slurry comprising:

        a. an adsorbent impregnated with a metal selected from gold, silver, platinum or copper or an alloy of the metal or a mixture thereof;
        b. a binder;
        c. a carbon nanotube has a surface carbon atom modified with an oxygen-based functional group or derivatives thereof and wherein the oxygen based functional group is selected from hydroxyl group, a carbonyl group , an aldehyde group , a carboxyl group , a nitro group or a mixture thereof;
        d. a conductive carbon black; and,
        e. a fluid in an amount not more than four times by total dry weight of said slurry;

    (ii) applying the slurry obtained in step (i) onto a substrate placed in a mould;
    (iii) compressing said mould under a pressure of from 196kN/m$^2$ to 980kN/m$^2$;
    (iv) heating said mould to a temperature in the range 150 to 350°C for 30 minutes to 2 hours to provide a substrate coated with electrode active material; and,
    (v) detaching the electrode active material from the substrate to provide the electrode active material.

Preferably the slurry prepared in the process of preparing the electrode active material comprises 60 to 80 parts by weight of an adsorbent impregnated with a metal selected from gold, silver, platinum or copper or an alloy of the metal or a mixture thereof, 5 to 30 parts by weight of a binder, 0.5 to 2 parts by weight of a carbon nanotube wherein the carbon nanotube has a surface carbon atom modified with an oxygen-based functional group or derivatives thereof and wherein the oxygen based functional group is selected from hydroxyl group, a carbonyl group , an aldehyde group , a carboxyl group , a nitro group or a mixture thereof; 2 to 20 parts by weight of a conductive carbon black.

Also, in accordance with a third aspect disclosed is a process for preparing an electrode of the second aspect for capacitive deionisation of water, having the steps of:

(i) preparing a slurry comprising:

a. an adsorbent impregnated with a metal selected from gold, silver, platinum or copper or an alloy of the metal or a mixtures thereof;
b. a binder;
c. a carbon nanotube wherein the carbon nanotube has a surface carbon atom modified with an oxygen-based functional group or derivatives thereof and wherein the oxygen based functional group is selected from hydroxyl group, a carbonyl group , an aldehyde group , a carboxyl group , a nitro group or a mixture thereof;
d. a conductive carbon black; and,
e. a fluid in an amount not more than four times by total dry weight of said slurry;

(ii) applying the slurry obtained in step (i) onto a current collector placed in a mould;
(iii) compressing the mould under a pressure of from $196kN/m^2$ to $980kN/m^2$;
(iv) heating the mould to a temperature in the range 150 to 350°C for 30 minutes to 2 hours to form the electrode; and,
(v) demoulding the moulded electrode.

Preferably the slurry in the process of preparing the electrode comprises 60 to 80 parts by weight of an adsorbent impregnated with a metal as disclosed herein, 5 to 30 parts by weight of a binder, 0.5 to 2 parts by weight of a carbon nanotube wherein the carbon nanotube has a surface carbon atom modified with an oxygen-based functional group or derivatives thereof and wherein the oxygen based functional group is selected from hydroxyl group, a carbonyl group , an aldehyde group , a carboxyl group , a nitro group or a mixture thereof; 2 to 20 parts by weight of a conductive carbon black.

In a preferred process, the fluid is water. Further preferably, casting of the slurry is done using a mould to form a sheet, more preferably casting of the slurry is done over a current collector in the mould. The current collector may be any commonly known type of current collector. The material of which the current collector is made, is a conducting material. The current collector is typically made of either a metallic or a non-metallic substance. In general, metal current collector are not usually preferred as the metal has a tendency towards reacting with the water in use, which is not desirable. Although less preferred metallic current collectors, are typically non-precious metals and includes but not limited to copper, aluminum, nickel, stainless steel or titanium. It is preferred that the current collector is selected from copper, aluminum and titanium. Non-metallic current collector is particularly preferred current collector, suitable examples include but not limited to carbon such as graphite or carbon mixtures with a high graphite content. The current collectors may be in the form of plates, sheets or foils, but mostly they are in the form of sheets. It is highly preferred that the current collector in the disclosed electrode is a graphite current collector in the form of a sheet.

During the process, it is preferred that temperature of the mould is maintained from 200 to 300 °C. It is preferred that the mould is compressed to pressure not greater than 30 $kg/cm^2$ before heating the mould. Further preferred pressure is from 12 to 25 $kg/cm^2$.

The disclosed process results in a more or less homogeneous mix, unlike a layered block or layered moulded article.

In any of the process disclosed in the second aspect of the invention the adsorbent preferably has a specific surface area of 100 to 1300$m^2/g$ and a metal is preferably impregnated on the adsorbent, said metal preferably is selected from gold, silver, platinum or copper or an alloy of the metal or mixtures thereof.

Further details of the electrode

In order to use the electrode they are usually cut to required size. This size depends on the size of the corresponding capacitive deionization cell in which the electrodes are assembled. Usually the electrodes are assembled in the order of pairs, such as 11 pairs, 13 pairs and preferably up to 25 pairs. Beyond 25 pairs, the hydraulic resistance of the arrangement of electrodes becomes too high which causes more pressure drop. Second reason is there is often some lag between the charging cycle and the exit of purified water from the system because the path length defined by the arrangement of electrodes is too high. In a preferred method, water is passed through 8 to 25 pairs of electrodes. It is normally the case that of the total number of electrodes, a sizeable number is double sided electrodes and most often when "n" pairs of electrodes are used; the number of double sided pairs is "n-1" leaving the balance one pair to be used as single sided electrodes, which, in an assembly or stack, are placed one each as the terminal electrodes.

It is particularly preferred that of all the pairs of electrodes, a major portion of the electrodes are double-sided and correspondingly a minor portion of the electrodes are single-sided.

While it is preferred to have parallel arrangement of electrodes, they could also be arranged in series.

It is preferred that thickness of each double-sided electrode is 1 to 6 mm preferably 2 to 5 mm and more preferably 3 to 4 mm. It is preferred that thickness of each single-sided electrode is 1 to 3 mm.

A non-conducting material, such as nylon cloth is preferably used to prevent direct contact between the electrodes. It is particularly preferred that the gap between two adjacent electrodes is upto 1 mm. Further detailed account of electrodes can be found in WO2009/077276 A1 (Unilever).

As the adsorbent, such as carbon, is preferably pre-impregnated with the metal such as silver, gold, platinum or copper or an alloy of the metal or a mixtures thereof, there is no need for any further post-treatment like coating of the electrodes after they are formed.

Description of a capacitive deionisation cell

In order to use the electrodes, they need to be assembled to form a cell called as a capacitive deionisation cell. The method to form a cell is briefly described.

Usually in such a cell a pair of electrodes is connected to respective positive and negative potential. An enclosure surrounds the capacitive deionisation cell which has provision for the water to flow in and out of the cell. The enclosure also provides for making connections externally to the electrodes in the cell.

Any known means may be used for the input of water into the cell. Water is generally fed through a reservoir or by an inline source of water and a pump. For example, the water stored in the reservoir is fed into the capacitive deionisation cell or the capacitive deionisation cell is connected to a direct source of water such as a tap.

Where pumps are used, water can be pumped under flow rate of 1 to 1500 mL/minute, more preferably 10 to 300 mL/min. More common flow rate is about 55 mL/minute to 200 mL/minute. It is preferred that the water is pre-filtered to render it free of organic materials and particulate impurities. Suitable filtration means can be adopted.

Power Supply

A power supply is necessary for the operation of the capacitive deionization cell. Power can be supplied by any means. However it is preferred that power is supplied by a programmable DC system for supplying DC voltage and for applying pre-programmed timed steps like short-circuiting, charging and discharging.

It is preferred that the voltage applied across the electrodes during the charging step is 0.1 to 10 V, more preferably from 0.8 to 8 V and still more preferably from 1.0 to 6 V. In the discharging step, when the charges on the electrodes are reversed albeit only for a brief period, the preferred applied voltage is -0.1 to -10 V more preferably from -0.8 to - 8 V and still more preferably from -1.0 to - 6 V.

Measuring the TDS

A conductivity meter is used to measure the concentration of salts in water and with suitable electronic programs; the TDS is directly calculated and displayed. Preferably two such meters are used. A first conductivity meter located before the capacitive deionisation cell measures the concentration of the salts in the input water. A second conductivity meter located after the cell measures concentration of the salts in output water. This second conductivity meter is connected to an electronic processor. The electronic processor receives electrical signal from the conductivity meter and it converts the electrical signal from the conductivity meter into TDS. It is preferred that conductivity is measured at regular intervals of e.g. one second, which can be controlled by the electronic processor.

In order to provide some means for controlling the output of water, a solenoid valve is generally used in such capacitive deionisation cells.

A solenoid valve is an electromechanically operated valve. The valve is controlled by an electric current through a solenoid. In the case of a two-port valve, the flow is switched on or off and in the case of a three-port valve; the outflow is switched between the two outlet ports. Solenoid valves are the most commonly used control elements in fluid flow.

It is preferred that a 3-way solenoid valve is used of which one port is for input of water and other two are for output. It is preferred that the solenoid valve is connected to the conductivity meter having a relay switch. When TDS is more than the preset limit, the flow-through of water is normally closed and the water comes from an output port. When the TDS is lowered below the pre-set point, the relay switch is turned on and the current flows to the solenoid valve which then switches the flow path to another port.

The electronic processor controls the opening of the specific port of the solenoid valve based on the measured input and output TDS levels and the pre-determined pre-set points for TDS. It is preferred that the TDS of input water is 700 to 800 ppm but the TDS could vary depending on the source of water. It is preferred that the TDS is lowered to at least 30 % of its initial level after deionisation, e.g. reduction from an initial input level of 100 ppm to at least 30 ppm in the output water.

If the electrodes fail to provide lowering by 30%, then the electrodes may need an intervention. In other words, if the input TDS is 100 ppm and the output TDS is above 70 ppm, the electrodes may need an intervention.

It is preferred that the pre-set upper limit of TDS (i.e. maximum allowable TDS) is 550 ppm, more preferably 300 ppm. A drastic reduction in TDS so as to completely remove all the dissolved salts is not desirable. Water devoid of any dissolved solids usually tastes insipid.

Therefore, the $TDS_{set}$ is minimum 150 ppm. This means that it is preferable to have to minimum of 150 ppm TDS in the output water.

The electrode in use

In use, a capacitive device having two or more electrodes is arranged in series. Each electrode has a first face, an opposing second face and thickness defined by an outer surface extending from the first face to the opposing second face. A first current collector is in electrical contact with the outer surfaces of one or more of the electrodes and insulated from one or more other electrodes through contact with a compliant material disposed between the first current collector and the outer surfaces of one or more other electrodes. A second current collector is in electrical contact with one or more of the electrodes insulated from the first current collector.

A typical method of purification of water has repeating series of cycles during which input water is passed through at least one pair of oppositely charged electrodes, each cycle has:

(i) a charging step;
(ii) a first short-circuiting step;
(iii) a discharging step consisting of reversal of the charges on the electrodes; and
(iv) a second short-circuiting step.

Reversal of applied polarity before ten cycles makes the process inefficient. This is because after change in polarity the system takes a few cycles (termed as waste cycles) to stabilize and perform to its maximum efficiency. Therefore if the polarity is reversed frequently, the number of waste cycles increases which would render the process inefficient. Reversal of charges after twenty cycles would not produce the desired effect as the electrodes would by then have adsorbed more ions.

In the charging step, ions which are present in input water get adsorbed to the surface of the electrodes. In a preferred method, duration of the charging step is for 1 to 25 minutes, more preferably 6 to 18 minutes, further more preferably 12 to 18 minutes. This duration for each step depends on the type of electrodes, the material of their construction, their dimensions, the applied voltage and the TDS of water which is to be treated.

The first short-circuiting step helps to equalize or neutralize the charges adhering to the electrodes so that the ions can pass into the bulk of the water. In a preferred method, duration of the first short-circuiting step is 2 to 60 seconds, more preferably 8 to 15 seconds and most preferably 10 to 15 seconds.

Even after the first short-circuiting step, some ions may still adhere to the electrodes, among other reasons, due to the non-specific driving force for desorption. This is achieved by the discharging step which consists of reversal of the applied charge on the electrodes for a brief period which helps release ions adsorbed by the residual charge of the electrodes. Such ions are then readily released by the repulsive electric forces.

Method for purification of water

During purification, positive and negative potential is applied across the electrodes and the counter-ions which are present in water get attracted to the electrodes of corresponding opposite charge. This effect leads to lowering in the ions which are present in the input water.

In the regeneration step, the charge on the electrodes is reversed (or the electrodes are short-circuited). In this step, ions get desorbed from the electrodes and pass into the flowing water due to electrostatic repulsion. During this step, a greater amount of ions is present in the water. Such water is generally not fit for consumption therefore commercial devices have built-in mechanisms to discard this water.

According to a third aspect there is provided a device for desalination of water comprising a housing including a plurality of electrodes molded from a slurry comprising 60 to 88 parts by weight of activated carbon with a particle size range of 75 to 300 $\mu$m and impregnated with a metal according to the present invention, 5 to 30 parts by weight of thermoplastic polymeric binder with a particle size range of 20 to 60 $\mu$m, 0.5 to 2 parts by weight carbon nanotube wherein the carbon nanotube has a surface carbon atom modified with an oxygen-based functional group or derivatives thereof wherein the oxygen based functional group is selected from hydroxyl group, a carbonyl group , an aldehyde group , a carboxyl group , a nitro group or a mixture thereof and 2 to 30 parts by weight of conductive carbon black wherein said electrodes are connected to a source of DC power to provide voltage lower than 1.4 V potential.

Further details of the invention will now be explained with reference to non-limiting examples.

According to yet another aspect is provided a gravity-fed water purification device for removal of dissolved salts from water comprising a housing having a plurality of electrodes of the first aspect wherein the electrodes are connected to a source of DC power to provide voltage less than 1.4 V potential across the electrodes.

According to a further aspect provided is a use of an adsorbent impregnated with a metal selected from gold, silver, platinum or copper or an alloy of the metal or a mixture thereof and a carbon nanotube having a surface carbon atom modified with an oxygen-based functional group wherein the oxygen based functional group is selected from hydroxyl group, a carbonyl group, an aldehyde group , a carboxyl group , a nitro group or a mixture thereof in an electrode active material in a capacitive deionization electrode for prolonging the life of the electrode.

**Examples**

Example1: Process for preparing the electrode

The electrode was prepared by wet mixing process followed by thermal annealing.

A first comparative electrode (C1) was prepared by forming a slurry of powdered activated carbon (PAC, supplied by Active Carbon Ltd, 1050 $m^2$/g), binder (high density polyethylene, supplied by Ticona) and conductive carbon black (CCB, supplied by TIMCAL, 770 $m^2$/g) with Milli-Q water. The ratio of powdered activated carbon: binder: conductive carbon black was 70:20:10.

The slurry was spread on a circular graphite sheet of 3 mm thickness and 15cm diameter. The graphite sheet was placed inside a mould and compressed under a pressure of 980 kN/$m^2$. The mould was then kept inside a hot air oven for 2 hours. The temperature of the hot air oven was maintained 200 °C.

A second comparative electrode (C2) was prepared in a similar way as that of the electrode of C1, except that the powdered activated carbon of C1 was replaced with 0.2% silver impregnated powdered activated carbon (AgPAC, supplied by Active Carbon Ltd). The particle size distribution of AgPAC was similar to that of PAC.

Preparation of disclosed carbon nanotube: For preparing the carbon nanotube having a surface carbon atom modified with oxygen based functional group according to the present invention, 3 grams of multiwalled (MWCNT) was mixed with 200 mL of $H_2SO_4$:$HNO_3$, the two acids were mixed in a ratio of 3:1. The prepared mixture was sonicated for 3 hours in a water bath and repeatedly centrifuged with distilled water till the pH of decant was neutral. The sediment was then filtered through 0.22 micron filter and dispersed in Milli-Q water to obtain a dispersion of modified carbon nanotube. The modified carbon nanotube has both carboxyl and nitro functional groups.

The milli-Q water used in forming the slurry of the electrode C1 was replaced with the dispersion of modified carbon nanotube obtained in the process as described above to obtain the third comparative electrode (C3). Electrode C3 had 1 wt% of MWCNT having a surface carbon atom modified with oxygen based functional group. The ratio of powdered activated carbon: binder: conductive carbon black:MWCNT having a surface carbon atom modified with oxygen based functional group was 69.3:20:10:0.7.

An electrode according to the present invention (Ex 1) was prepared by replacing PAC in the slurry composition of comparative example C3 with 0.2 % silver impregnated powdered activated carbon (AgPAC, supplied by Active Carbon Ltd). The particle size distribution of AgPAC was similar to that of PAC. The ratio of silver impregnated powdered activated carbon: binder: conductive carbon black: MWCNT having a surface carbon atom modified with oxygen based functional group was 69.3:20:10:0.7

The composition of the comparative electrode and the electrode according to the present invention is provided in Table 1.

Method of measuring salt removal:

The salt removal of the electrode is measured from the input TDS and output TDS using the relation,

$$\text{Salt removal (\%) = (Input TDS – Output TDS)*100/Input TDS}$$

The output TDS refers to TDS of output water during purification.

Method of measuring electrical conductivity:

The electrical conductivity of the electrode material was derived from the I-V characteristics using a potentiostat (Model 263A, Princeton Applied Research), interfaced with a computer. The samples were made in the form of pellets of diameter 2.5 cm and thickness 0.7 cm. The voltage across the flat faces of pellet was varied from 10 mV to 100 mV at a scan rate of 1 mV/s. The corresponding current was measured. The slope of the linear fit of I-V curve gives the resistance (R) of the material. The electrical conductivity ($\sigma$) was then calculated from $\sigma$ = L / (A*R), where L and A are thickness and face area of the pellet respectively.

Method of measuring Contact angle of electrode active material ($^0$):

The contact angle of electrode was measured using Washburn method. Accordingly the rate of penetration of liquid in porous material depends on the radius of the pores (r), contact angle ($\theta$), viscosity ($\eta$) and surface energy ($\gamma$) of the penetrating liquid. The relation can be summarized as

$$\cos\theta = \frac{m^2}{t}\frac{\eta}{\gamma\rho^2}\frac{2}{n^2\pi^2 r^5} \tag{1}$$

Where m, the mass of the liquid (of density ($\rho$)) penetrated in time, t. '$\frac{\eta}{\gamma\rho^2}$' represents liquid properties and '$\frac{2}{n^2\pi^2 r^5}$' corresponds to material properties. Hexane was used to quantify the material properties due to its low surface energy (contact angle, 0°). The penetration rate measurements were done on Kruss Tensiometer using electrode strips of length 50 mm and width 10 mm. The slopes of mass$^2$ vs t were calculated from the data and were used to find the contact angle of the electrode materials.

Example 2: Salt removal capacity of the electrode according to the present invention and comparative electrode

Table 1

| Ingredients (in grams) | C1 | C2 | C3 | Ex 1 |
|---|---|---|---|---|
| Powder activated carbon (PAC) | 70 | - | 69.3 | - |
| Binder | 20 | 20 | 20 | 20 |
| Conductive carbon black | 10 | 10 | 10 | 10 |
| Ag impregnated PAC | - | 70 | - | 69.3 |
| Modified MWNT | - | - | 0.7 | 0.7 |
| Weight of electrode (in grams) | 20 | 20 | 20 | 20 |
| Total surface area (m$^2$/g) | 794 | 811 | 586 | 489 |
| Contact angle ($^0$) | 89.9 | 89.9 | 83.5 | 82.2 |
| Electrical conductivity (S/m) | 28.4 | 39.44 | 44.36 | 52.3 |
| Sp. Capacitance (F/g) | 32.17 | 34.0 | 40.8 | 40.8 |
| Salt removal (%) | 35.8 | 46.72 | 45.03 | 51.79 |
| Recovery (%) | 29.96 | 42.62 | 46.35 | 47.32 |

The data on Table 1 shows that the comparative electrode C1 with powder activated carbon has the least efficiency in terms of salt removal. The incorporation of silver powder activated carbon into the comparative electrode C2 slightly improves the salt removal efficiency by improving the electrical conductivity of the electrode. Comparative electrode C3 having modified carbon nanotube as disclosed also shows a salt removal efficiency similar to that of C2. However the electrode according to the present invention having silver impregnated PAC and the disclosed modified carbon nanotube shows improved salt removal and also surprisingly higher electrical conductivity.

**Claims**

1. An electrode active material for a capacitive deionisation electrode, said electrode active material comprising:

   i. an adsorbent impregnated with a metal;
   ii. a conductive carbon black;
   iii. a carbon nanotube wherein the carbon nanotube has a surface carbon atom modified with an oxygen-based functional group or derivatives thereof; and,
   iv. a binder.

   wherein the oxygen based functional group is selected from hydroxyl group, a carbonyl group, an aldehyde group, a carboxyl group, a nitro group or a mixture thereof and wherein the metal is selected from gold, silver, platinum or copper or an alloy of the metal or mixtures thereof.

2. An electrode active material as claimed in claim 1 wherein the functional group is a carboxyl group , a nitro group or a mixture thereof.

3. An electrode active material as claimed in any one of the preceding claims wherein the carbon nanotube is single-walled, double-walled or multi-walled.

4. An electrode active material as claimed in any one of the preceding claims wherein the amount of carbon nanotube is in the range from 0.5 to 2wt% of the adsorbent.

5. An electrode active material as claimed in any one of the preceding claims wherein the surface carbon atom is modified with an oxygen-based functional group, obtainable by treating the carbon nanotube with an oxidising agent comprising sulphuric acid and nitric acid in a ratio of 3:1.

6. An electrode active material as claimed in any one of the preceding claims wherein the adsorbent has a specific surface area of 100 to 1300$m^2$/g.

7. An electrode active material as claimed in any one of the preceding claims comprising 5 to 15wt% of conductive carbon black.

8. An electrode active material as claimed in any one of the preceding claims wherein said binder is a thermoplastic polymeric binder.

9. An electrode for capacitive deionization comprising:

   i. a current collector; and,
   ii. an electrode active material as claimed in any one of claims 1 to 8 where the electrode active material is dispersed on the current collector.

10. A process for preparing the electrode active material as claimed in claim 1 for capacitive deionization electrode having the steps of:

    i. preparing a slurry comprising:

       a) an adsorbent impregnated with a metal selected from gold, silver, platinum or copper or an alloy of the metal or mixtures thereof;
       b) a binder;
       c) a carbon nanotube wherein the carbon nanotube has a surface carbon atom modified with an oxygen-based functional group or derivatives thereof and wherein the oxygen based functional group is selected from hydroxyl group, a carbonyl group , an aldehyde group , a carboxyl group , a nitro group or a mixture thereof;
       d) conductive carbon black; and,

e) a fluid in an amount not more than four times the total dry weight of said slurry;

ii. applying the slurry obtained in step (i) onto a substrate placed in a mould;

iii. compressing said mould under a pressure of from 196kN/m$^2$ to 980kN/m$^2$;

iv. heating said mould to a temperature in the range 150 to 350°C for 30 minutes to 2 hours to provide a substrate coated with electrode active material; and,

v. detaching the electrode active material from the substrate to provide the electrode active material.

11. A process for preparing the electrode as claimed in Claim 9 for capacitive deionisation, having the steps of:

i. preparing a slurry comprising:

a) an adsorbent impregnated with a metal selected from gold, silver, platinum or copper or an alloy of the metal or mixtures thereof;

b) a binder;

c) a carbon nanotube wherein the carbon nanotube has a surface carbon atom modified with an oxygen-based functional group or derivatives thereof and wherein the oxygen based functional group is selected from hydroxyl group, a carbonyl group , an aldehyde group , a carboxyl group , a nitro group or a mixture thereof;

d) conductive carbon black; and,

e) a fluid in an amount not more than four times the total dry weight of said slurry;

ii. applying the slurry obtained in step (i) onto a current collector placed in a mould;

iii. compressing the mould under a pressure of from 196kN/m$^2$ to 980kN/m$^2$;

iv. heating the mould to a temperature in the range 150 to 350°C for 30 minutes to 2 hours to form the electrode; and,

v. demoulding the moulded electrode.

12. Use of an adsorbent impregnated with a metal selected from gold, silver, platinum or copper or an alloy of the metal or mixtures thereof and a carbon nanotube having a surface carbon atom modified with an oxygen-based functional group or derivatives thereof wherein the oxygen based functional group is selected from hydroxyl group, a carbonyl group, an aldehyde group , a carboxyl group , a nitro group or a mixture thereof in an electrode active material in a capacitive deionization electrode for prolonging the life of the electrode.

**Patentansprüche**

1. Aktives Elektrodenmaterial für eine kapazitive Deionisierungselektrode, wobei das aktive Elektrodenmaterial umfasst:

i. ein Adsorptionsmittel, das mit einem Metall imprägniert ist;

ii. leitfähigen Ruß;

iii. ein Kohlenstoffnanoröhrchen, wobei das Kohlenstoffnanoröhrchen ein Oberflächenkohlenstoffatom aufweist, modifiziert mit einer funktionellen Gruppe auf Sauerstoffbasis oder Derivaten davon; und

iv. ein Bindemittel,

wobei die funktionelle Gruppe auf Sauerstoffbasis unter einer Hydroxylgruppe, einer Carbonylgruppe, einer Aldehydgruppe, einer Carboxylgruppe, einer Nitrogruppe oder einer Mischung davon ausgewählt ist und wobei das Metall unter Gold, Silber, Platin oder Kupfer oder einer Legierung des Metalls oder Mischungen davon ausgewählt ist.

2. Aktives Elektrodenmaterial, wie im Anspruch 1 beansprucht, wobei die funktionelle Gruppe eine Carboxylgruppe, eine Nitrogruppe oder eine Mischung davon ist.

3. Aktives Elektrodenmaterial, wie in irgendeinem der vorhergehenden Ansprüche beansprucht, wobei das Kohlenstoffnanoröhrchen einwandig, doppelwandig oder mehrwandig ist.

4. Aktives Elektrodenmaterial, wie in irgendeinem der vorhergehenden Ansprüche beansprucht, wobei die Menge des Kohlenstoffnanoröhrchens in dem Bereich von 0,5 bis 2 Gew.-% des Adsorptionsmittels liegt.

5. Aktives Elektrodenmaterial, wie in irgendeinem der vorhergehenden Ansprüche beansprucht, wobei das Oberflächenkohlenstoffatom mit einer funktionellen Gruppe auf Sauerstoffbasis modifiziert ist, erhältlich durch Behandlung des Kohlenstoffnanoröhrchens mit einem Oxidationsmittel, das Schwefelsäure und Salpetersäure in einem Verhältnis von 3:1 umfasst.

6. Aktives Elektrodenmaterial, wie in irgendeinem der vorhergehenden Ansprüche beansprucht, wobei das Adsorptionsmittel eine spezifische Oberfläche von 100 bis 1300 $m^2$/g aufweist.

7. Aktives Elektrodenmaterial, wie in irgendeinem der vorhergehenden Ansprüche beansprucht, umfassend 5 bis 15 Gew.-% leitfähigen Ruß.

8. Aktives Elektrodenmaterial, wie in irgendeinem der vorhergehenden Ansprüche beansprucht, wobei das Bindemittel ein thermoplastisches polymeres Bindemittel ist.

9. Elektrode für die kapazitive Deionisierung, umfassend:

   i. einen Stromabnehmer und
   ii. ein aktives Elektrodenmaterial, wie in irgendeinem der Ansprüche 1 bis 8 beansprucht, wobei das aktive Elektrodenmaterial auf dem Stromabnehmer verteilt ist.

10. Verfahren zur Herstellung eines aktiven Elektrodenmaterials, wie im Anspruch 1 beansprucht, für eine kapazitive Deionisierungselektrode, das die Schritte aufweist:

   i. Herstellen einer Aufschlämmung, umfassend:

   a) ein Adsorptionsmittel, das mit einem Metall imprägniert ist, das unter Gold, Silber, Platin oder Kupfer oder einer Legierung des Metalls oder Mischungen davon ausgewählt ist;
   b) ein Bindemittel;
   c) ein Kohlenstoffnanoröhrchen, wobei das Kohlenstoffnanoröhrchen ein Oberflächenkohlenstoffatom aufweist, modifiziert mit einer funktionellen Gruppe auf Basis von Sauerstoff oder Derivaten davon, und wobei die funktionelle Gruppe auf Sauerstoffbasis unter einer Hydroxylgruppe, einer Carbonylgruppe, einer Aldehydgruppe, einer Carboxylgruppe, einer Nitrogruppe oder einer Mischung davon ausgewählt ist;
   d) leitfähigen Ruß; und
   e) ein Fluid in einer Menge von nicht mehr als dem Vierfachen des gesamten Trockengewichts der Aufschlämmung;

   ii. Auftragen der Aufschlämmung, erhalten im Schritt (i), auf ein in einer Form angeordnetes Substrat;
   iii. Komprimieren der Form unter einem Druck von 196 $kN/m^2$ bis 980 $kN/m^2$;
   iv. Erhitzen der Form auf eine Temperatur in dem Bereich von 150 bis 350°C während 30 Minuten bis zu 2 Stunden, um ein Substrat zu liefern, das mit einem aktiven Elektrodenmaterial beschichtet ist; und
   v. Lösen des aktiven Elektrodenmaterials von dem Substrat, um das aktive Elektrodenmaterial zu liefern.

11. Verfahren zur Herstellung der Elektrode, wie im Anspruch 9 beansprucht, für die kapazitative Deionisierung, das die Schritte umfasst:

   i. Herstellen einer Aufschlämmung, umfassend:

   a) ein Adsorptionsmittel, das mit einem Metall imprägniert ist, das unter Gold, Silber, Platin oder Kupfer oder einer Legierung des Metalls oder Mischungen davon ausgewählt ist;
   b) ein Bindemittel;
   c) ein Kohlenstoffnanoröhrchen, wobei das Kohlenstoffnanoröhrchen ein Oberflächenkohlenstoffatom aufweist, modifiziert mit einer funktionellen Gruppe auf Basis von Sauerstoff oder Derivaten davon, und wobei die funktionelle Gruppe auf Sauerstoffbasis unter einer Hydroxylgruppe, einer Carbonylgruppe, einer Aldehydgruppe, einer Carboxylgruppe, einer Nitrogruppe oder einer Mischung davon ausgewählt ist;
   d) leitfähigen Ruß; und
   e) ein Fluid in einer Menge von nicht mehr als dem Vierfachen des gesamten Trockengewichts der Aufschlämmung;

ii. Auftragen der Aufschlämmung, erhalten im Schritt (i), auf einen in einer Form angeordneten Stromabnehmer;
iii. Komprimieren der Form unter einem Druck von 196 kN/m$^2$ bis 980 kN/m$^2$;
iv. Erhitzen der Form auf eine Temperatur in dem Bereich von 150 bis 350°C während 30 Minuten bis zu 2 Stunden, um die Elektrode zu bilden; und
v. Ablösen der geformten Elektrode.

12. Verwendung eines Adsorptionsmittels, das mit einem Metall imprägniert ist, das unter Gold, Silber, Platin oder Kupfer oder einer Legierung des Metalls oder Mischungen davon ausgewählt ist, und eines Kohlenstoffnanoröhrchens, das ein Oberflächenkohlenstoffatom aufweist, modifiziert mit einer funktionellen Gruppe auf Basis von Sauerstoff oder Derivaten davon, wobei die funktionelle Gruppe auf Sauerstoffbasis unter einer Hydroxylgruppe, einer Carbonylgruppe, einer Aldehydgruppe, einer Carboxylgruppe, einer Nitrogruppe oder einer Mischung davon ausgewählt ist, in einem aktiven Elektrodenmaterial in einer kapazitiven Deionisierungselektrode zum Verlängern der Betriebsdauer der Elektrode.

## Revendications

1. Matière active d'électrode pour une électrode de désionisation capacitive, ladite matière active d'électrode comprenant :

   i. un adsorbant imprégné avec un métal ;
   ii. un noir de carbone conducteur ;
   iii. un nanotube de carbone dans lequel le nanotube de carbone présente un atome de carbone de surface modifié avec un groupe fonctionnel à base d'oxygène ou des dérivés de celui-ci ; et,
   iv. un liant

   dans laquelle le groupe fonctionnel à base d'oxygène est choisi parmi un groupe hydroxyle, un groupe carbonyle, un groupe aldéhyde, un groupe carboxyle, un groupe nitro ou un mélange de ceux-ci et dans laquelle le métal est choisi parmi l'or, l'argent, le platine ou le cuivre ou un alliage du métal ou des mélanges de ceux-ci.

2. Matière active d'électrode selon la revendication 1, dans laquelle le groupe fonctionnel est un groupe carboxyle, un groupe nitro ou un mélange de ceux-ci.

3. Matière active d'électrode selon l'une quelconque des revendications précédentes, dans laquelle le nanotube de carbone est à paroi unique, à double paroi ou à parois multiples.

4. Matière active d'électrode selon l'une quelconque des revendications précédentes, dans laquelle la quantité de nanotube de carbone se trouve dans l'intervalle de 0,5 à 2 % en masse de l'adsorbant.

5. Matière active d'électrode selon l'une quelconque des revendications précédentes, dans laquelle l'atome de carbone de surface est modifié avec un groupe fonctionnel à base d'oxygène, pouvant être obtenu par traitement du nanotube de carbone avec un agent oxydant comprenant de l'acide sulfurique et de l'acide nitrique dans un rapport de 3:1.

6. Matière active d'électrode selon l'une quelconque des revendications précédentes, dans laquelle l'adsorbant présente une surface spécifique de 100 à 1 300 m$^2$/g.

7. Matière active d'électrode selon l'une quelconque des revendications précédentes comprenant de 5 à 15 % en masse de noir de carbone conducteur.

8. Matière active d'électrode selon l'une quelconque des revendications précédentes dans laquelle ledit liant est un liant polymère thermoplastique.

9. Electrode pour désionisation capacitive comprenant :

   i. un collecteur de courant ; et,
   ii. une matière active d'électrode selon l'une quelconque des revendications 1 à 8 où la matière active d'électrode est dispersée sur le collecteur de courant.

**10.** Procédé de préparation de la matière active d'électrode selon la revendication 1 pour une électrode de désionisation capacitive présentant les étapes de :

i. préparation d'une suspension comprenant :

a) un adsorbant imprégné avec un métal choisi parmi l'or, l'argent, le platine ou le cuivre ou un alliage du métal ou des mélanges de ceux-ci ;
b) un liant ;
c) un nanotube de carbone dans lequel le nanotube de carbone présente un atome de carbone de surface modifié avec un groupe fonctionnel à base d'oxygène ou des dérivés de celui-ci dans lequel le groupe fonctionnel à base d'oxygène est choisi parmi un groupe hydroxyle, un groupe carbonyle, un groupe aldéhyde, un groupe carboxyle, un groupe nitro ou un mélange de ceux-ci ;
d) du noir de carbone conducteur ; et,
e) un fluide dans une quantité d'au plus quatre fois la masse sèche totale de ladite suspension ;

ii. application de la suspension obtenue dans l'étape (i) sur un substrat placé dans un moule ;
iii. compression dudit moule sous une pression de 196 kN/m$^2$ à 980 kN/m$^2$ ;
iv. chauffage dudit moule à une température dans l'intervalle de 150 à 350°C pendant de 30 minutes à 2 heures pour fournir un substrat revêtu de la matière active d'électrode ; et,
v. détachement de la matière active d'électrode du substrat pour fournir la matière active d'électrode.

**11.** Procédé de préparation de l'électrode selon la revendication 9 pour une désionisation capacitive, présentant les étapes de :

i. préparation d'une suspension comprenant :

a) un adsorbant imprégné avec un métal choisi parmi l'or, l'argent, le platine ou le cuivre ou un alliage du métal ou des mélanges de ceux-ci ;
b) un liant ;
c) un nanotube de carbone dans lequel le nanotube de carbone présente un atome de carbone de surface modifié avec un groupe fonctionnel à base d'oxygène ou des dérivés de celui-ci et dans lequel le groupe fonctionnel à base d'oxygène est choisi parmi un groupe hydroxyle, un groupe carbonyle, un groupe aldéhyde, un groupe carboxyle, un groupe nitro ou un mélange de ceux-ci ;
d) du noir de carbone conducteur ; et,
e) un fluide dans une quantité d'au plus quatre fois la masse sèche totale de ladite suspension ;

ii. application de la suspension obtenue dans l'étape (i) sur un collecteur de courant placé dans un moule ;
iii. compression du moule sous une pression de 196 kN/m$^2$ à 980 kN/m$^2$ ;
iv. chauffage du moule à une température dans l'intervalle de 150 à 350°C pendant de 30 minutes à 2 heures pour former l'électrode ; et,
v. démoulage de l'électrode moulée.

**12.** Utilisation d'un adsorbant imprégné d'un métal choisi parmi l'or, l'argent, le platine ou le cuivre ou un alliage du métal ou des mélanges de ceux-ci et d'un nanotube de carbone présentant un atome de carbone de surface modifié avec un groupe fonctionnel à base d'oxygène ou des dérivés de celui-ci dans laquelle le groupe fonctionnel à base d'oxygène est choisi parmi un groupe hydroxyle, un groupe carbonyle, un groupe aldéhyde, un groupe carboxyle, un groupe nitro ou un mélange de ceux-ci dans une matière active d'électrode dans une électrode de désionisation capacitive pour prolonger la durée de vie de l'électrode.

**EP 3 440 017 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014090508 A1
- US 20120187054 A1
- WO 2009077276 A1